# FASCICULE DE BREVET EUROPEEN

(11) **EP 3 176 458 B1**
(45) Date de publication et mention de la délivrance du brevet: **29.11.2017**
(21) Numéro de dépôt: 16201271.0
(22) Date de dépôt: 29.11.2016
(51) Int. Cl.: F16D 48/02

(54) **COMMANDE D'EMBRAYAGE**
KUPPLUNGSBETÄTIGUNGSVORRICHTUNG
CLUTCH ACTUATOR

(30) Priorité: 01.12.2015 FR 1561642
(43) Date de publication de la demande: 07.06.2017
(73) Titulaire: Valeo Embrayages, 80009 Amiens Cedex 2 (FR)
(72) Inventeur: MAUREL, Pascal, 75009 Paris (FR)
(74) Mandataire: Cardon, Nicolas

(56) Documents cités:
- EP-A1- 2 458 249
- EP-A2- 1 772 645
- FR-A1- 2 916 824

## Description

La présente invention concerne une commande d'embrayage et s'applique à un embrayage de type normalement fermé, que cet embrayage soit monté sur un véhicule de type passager ou sur un véhicule de type industriel, voir FR2916824 comme l'état de la technique le plus proche. Il est connu d'utiliser sur un tel véhicule un embrayage dont le passage en position débrayée est :
- soit directement causé par l'appui de l'utilisateur sur une pédale d'embrayage,
- soit causé par un actionneur électrique, cet actionneur électrique étant commandé par l'appui de l'utilisateur sur la pédale d'embrayage ou commandé par une instruction venant par exemple d'un calculateur de contrôle d'embrayage, indépendamment d'un appui sur une pédale d'embrayage.

Une telle commande d'embrayage, en garantissant un lien physique entre la pédale d'embrayage et l'embrayage pour commander ce dernier, permet de remédier au problème posé par une commande d'embrayage de type « clutch by wire » dans laquelle ce lien physique n'existe plus, une telle absence de lien physique s'avérant problématique en cas de panne de l'actionneur électrique ou de panne d'un élément nécessaire au bon fonctionnement de cet actionneur électrique.

Dans une telle commande, des problèmes de variation de l'effort de réaction exercé sur la pédale d'embrayage apparaissent cependant. En effet, l'embrayage peut déjà être commandé via l'actionneur électrique alors que l'utilisateur appuie sur la pédale d'embrayage, de sorte que l'effort de réaction exercé sur la pédale d'embrayage lorsque l'utilisateur appuie sur cette pédale peut être tel que l'utilisateur ressent que la pédale d'embrayage est trop molle ou bien trop dure.

Il existe un besoin pour bénéficier d'une commande d'embrayage permettant de maintenir le lien physique entre la pédale d'embrayage et l'embrayage, tout en bénéficiant des avantages associés à un embrayage de type « clutch by wire », et tout en conservant un effort de réaction exercé sur la pédale qui soit cohérent avec l'effort de réaction attendu par l'utilisateur.

L'invention vise à répondre à ce besoin et elle y parvient, selon l'un de ses aspects, à l'aide d'une commande d'embrayage, comprenant :
- une pédale d'embrayage,
- un cylindre émetteur envoyant du fluide sous pression dans une première conduite hydraulique lorsqu'un utilisateur appuie sur la pédale d'embrayage pour mettre l'embrayage en position débrayée,
- un actionneur électrique se déplaçant pour envoyer du fluide sous pression dans une deuxième conduite hydraulique lorsqu'une consigne visant à mettre l'embrayage en position débrayée est reçue,
- un cylindre récepteur recevant du fluide sous pression via une troisième conduite hydraulique lorsque l'on cherche à mettre l'embrayage en position débrayée, et
- un simulateur d'effort recevant du fluide sous pression via une quatrième conduite hydraulique et exerçant un effort de réaction apte à s'opposer à l'appui sur la pédale d'embrayage ou au déplacement de l'actionneur,
la commande comprenant un système d'aiguillage permettant de commuter entre au moins les deux configurations suivantes :
- une première configuration dans laquelle la première conduite est en communication fluidique avec la quatrième conduite et la deuxième conduite est en communication fluidique avec la troisième conduite, de manière à ce que le déplacement de l'actionneur pour suivre une consigne mette l'embrayage en position débrayée tandis que le simulateur d'effort exerce un effort de réaction s'opposant à l'appui sur la pédale d'embrayage, et
- une deuxième configuration dans laquelle la première conduite est en communication fluidique avec la troisième conduite, de manière à ce que l'appui sur la pédale d'embrayage mette l'embrayage en position débrayée.

Selon l'invention, lorsque le système d'aiguillage est dans la première configuration, l'embrayage fonctionne de la même façon qu'un embrayage de type « clutch by wire » et l'appui par un utilisateur sur la pédale d'embrayage génère un effort auquel s'oppose un effort de réaction généré par le simulateur d'effort, de sorte cet effort de réaction reste ainsi cohérent avec la position dans laquelle se trouve alors l'embrayage. L'effort de réaction généré sur la pédale d'embrayage peut être prédéfini et correspondre à l'effort de réaction qui serait généré sur la pédale d'embrayage si l'appui sur cette pédale commandait la mise en position débrayée de l'embrayage.

Le simulateur d'effort peut être passif et appliquer un effort de réaction déterminé via une réalisation mécanique de la caractéristique « effort de commande de l'embrayage/ course de commande de l'embrayage ». Cette réalisation mécanique repose par exemple sur un profil de came modifiant la flèche d'un ressort de la commande d'embrayage. En variante, le simulateur d'effort peut être actif et avoir préalablement appris la caractéristique « effort de commande embrayage/course de commande embrayage ».

Qu'il soit actif ou passif, le simulateur d'effort permet que, lorsque le système d'aiguillage est dans la première configuration, l'effort de réaction généré par le simulateur sur la pédale d'embrayage :
- corresponde au couple de réaction qui serait réellement exercé sur la pédale d'embrayage si le système d'aiguillage était dans la deuxième configuration dans laquelle l'appui sur la pédale d'embrayage permet de mettre l'embrayage en position débrayée, ou
- constitue une approximation satisfaisante de ce couple de réaction.

Dans la deuxième configuration du système d'aiguillage, la deuxième conduite peut être en communication fluidique avec la quatrième conduite, de manière à ce que le simulateur d'effort exerce un couple d'effort s'opposant au déplacement de l'actionneur. On a ainsi une parfaite inversion des connexions entre l'amont et l'aval du système d'aiguillage lorsque l'on commute de la première vers la deuxième configuration, et vice versa.

En variante, la deuxième conduite peut être fermée dans la deuxième configuration du système d'aiguillage. Dans ce cas, la deuxième conduite n'est pas en communication fluidique avec la quatrième conduite dans la deuxième configuration du système d'aiguillage. Cela peut rendre le système d'aiguillage plus simple à réaliser et moins coûteux.

Le système d'aiguillage comprend par exemple une électrovanne et un circuit de commande de cette électrovanne.

Le circuit de commande de l'électrovanne met par exemple en oeuvre un électroaimant et l'électrovanne comprend une tige portant plusieurs volets identiques décalés le long de la tige. Ces volets peuvent délimiter deux à deux des espaces étanches au sein d'une chambre dans laquelle débouchent la première, la deuxième, la troisième et la quatrième conduites hydrauliques. Le déplacement des volets par l'électroaimant permet ainsi de modifier les connexions entre l'amont et l'aval du système d'aiguillage.

Le circuit de commande de l'électrovanne communique par exemple avec l'unité de contrôle de l'embrayage et/ou avec l'unité de contrôle moteur (ECU en anglais) du véhicule.

La commande peut comprendre, pour permettre de commander l'embrayage via l'actionneur électrique :
- un capteur de position de la pédale d'embrayage, et
- une unité de pilotage apte à élaborer un signal de commande de l'actionneur en fonction de la position de la pédale d'actionnement.

Le cas échéant, l'unité de pilotage de l'actionneur et le circuit de commande de l'électrovanne appartiennent tous deux à l'unité de contrôle de l'embrayage.

La commande d'embrayage peut être unique et elle peut comprendre un unique actionneur électrique, un unique cylindre émetteur et un unique cylindre récepteur.

L'invention a encore pour objet, selon un autre de ses aspects, un procédé de commande d'un embrayage à l'aide de la commande d'embrayage telle que définie ci-dessus.

Le procédé peut comprendre les étapes suivantes :
- l'étape selon laquelle la première configuration du système d'aiguillage est imposée lorsqu'une consigne traduisant le non-appui sur la pédale d'accélérateur est reçue, et
- l'étape ultérieure selon laquelle l'actionneur est commandé pour mettre l'embrayage en position débrayée.

Le véhicule auquel l'embrayage est intégré permet par exemple de réaliser le mode « roue libre » ou « coasting » selon lequel le moteur thermique est coupé lorsqu'il n'est pas sollicité, afin d'économiser du carburant. Les étapes ci-dessus correspondent alors à l'établissement de ce mode « roue libre » par la mise en position débrayée de l'embrayage via l'actionneur électrique.

Le système d'aiguillage peut rester dans la première configuration, et le retour en position embrayée de l'embrayage se produira par exemple lorsque l'actionneur électrique, le cas échéant sur instruction de l'unité de contrôle moteur, permettra ce retour en position embrayée. Un tel retour en position embrayée peut se produire dans l'une au moins des circonstances suivantes :
- appui de l'utilisateur sur la pédale de frein,
- appui de l'utilisateur sur la pédale d'accélérateur,
- action de l'utilisateur sur le levier de vitesses,
- détection d'une inadéquation entre la vitesse du véhicule et le rapport de boîte de vitesses engagé,
- appui de l'utilisateur sur la pédale d'embrayage.

Dans un exemple, alors que l'embrayage est en position débrayée et que le système d'aiguillage est dans la première configuration, l'utilisateur peut appuyer sur la pédale d'embrayage dans le but de mettre l'embrayage en position débrayée, notamment pour changer de rapport de boîte de vitesses ou arrêter le véhicule. Grâce à l'invention, le fait que la pédale d'embrayage soit connectée au simulateur d'effort permet que l'effort de réaction exercé sur la pédale d'embrayage ne surprenne pas l'utilisateur en restant cohérent avec l'effort de réaction qu'il s'attend à ressentir.

Deux cas peuvent alors se produire. Selon un premier cas, l'appui exercé par l'utilisateur sur la pédale d'embrayage peut correspondre à un effort exercé sur cette pédale d'embrayage non suffisant pour atteindre la valeur d'effort permettant le débrayage, auquel cas le système d'aiguillage reste alors dans la première configuration. Selon ce premier cas, l'actionneur peut être commandé pour ramener l'embrayage en position embrayée en suivant le relâchement par l'utilisateur de la pédale d'embrayage. Autrement dit, la commande de l'embrayage se fait toujours via l'actionneur électrique, mais cette commande est synchronisée avec le relâchement de la pédale d'embrayage. Selon un second cas, l'appui exercé par l'utilisateur sur la pédale d'embrayage peut correspondre à un effort exercé sur la pédale d'embrayage suffisant pour atteindre la valeur d'effort permettant le débrayage. Selon ce deuxième cas, le système d'aiguillage passe dans la deuxième configuration afin que le retour en position embrayée puisse être effectué par relâchement de la pédale d'embrayage. L'appui sur la pédale d'embrayage provoque ainsi le passage à la deuxième configuration, de sorte que la commande de l'embrayage se fait alors via la pédale d'embrayage.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un exemple d'environnement dans lequel peut être mise en oeuvre l'invention,
- la figure 2 représente de façon schématique une commande d'embrayage selon un exemple de mise en oeuvre de l'invention,
- les figures 3 à 5 sont des chronogrammes illustrant différents cas possibles lorsque le mode « roue libre » est activé, aucun appui de l'utilisateur sur la pédale d'embrayage n'intervenant dans le cas de la figure 3 tandis que des appuis de force différente étant exercés sur les figures 4 et 5, et
- les figures 6 et 7 représentent un exemple de système d'aiguillage de la commande d'embrayage de la figure 2, ce système d'aiguillage étant dans une première configuration selon la figure 6 et dans une deuxième configuration selon la figure 7.

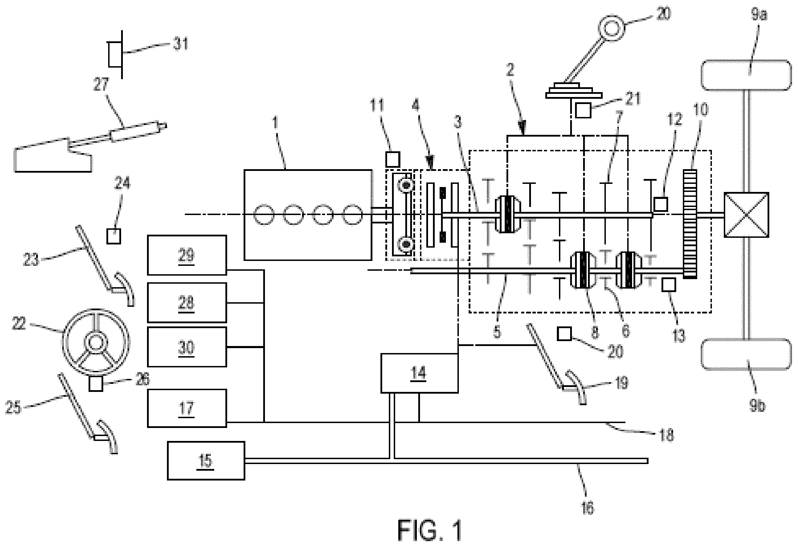

On a représenté de façon schématique sur la figure 1 un exemple de véhicule dans lequel le procédé selon l'invention peut être mis en oeuvre.

Le véhicule automobile, représenté sur cette figure, comporte un moteur thermique 1 dont l'arbre de sortie ou vilebrequin est relié à un arbre d'entrée 3 d'une boîte de vitesses 2 via un embrayage 4. De manière classique, la transmission de couple entre le vilebrequin et l'arbre d'entrée 3 de la boîte de vitesses 2 est assurée lorsque l'embrayage 4 est dans une position embrayée et est interrompue lorsque l'embrayage 4 est dans une position débrayée.

Selon un mode de réalisation, l'embrayage 4 comporte un plateau de réaction solidaire en rotation du vilebrequin du moteur à combustion 1, un disque de friction équipé d'un moyen cannelé coopérant avec des cannelures formées sur l'arbre d'entrée de la boîte de vitesses et un mécanisme d'embrayage. Le mécanisme d'embrayage comporte un plateau de pression mobile, un couvercle fixé sur le plateau de réaction, et un diaphragme monté, d'une part, basculant contre le fond du couvercle, et d'autre part, en appui contre un plateau de pression. Le diaphragme sollicite le plateau de pression en direction du plateau de réaction.

Un organe d'actionnement, tel qu'une butée d'embrayage, est apte à agir sur le diaphragme afin de le faire basculer et déplacer ainsi le plateau de pression entre une position embrayée, dans laquelle le disque de friction est pincé entre le plateau de pression et le plateau de réaction afin de permettre une transmission du couple moteur du vilebrequin vers l'arbre d'entrée de la boîte de vitesses, et une potion débrayée dans laquelle le plateau de pression est écarté du disque de friction.

Toujours en référence à la figure 1, on observe que la boîte de vitesses 2 comporte un arbre de sortie 5, parallèle à l'arbre d'entrée 3, qui est équipé de pignons fous 6 coopérant avec des pignons de vitesses 7 portés par l'arbre d'entrée 3. L'arbre de sortie 5 porte des synchroniseurs 8 permettant de solidariser en rotation les pignons fous 6 à l'arbre de sortie 5, de sorte à engager un rapport de transmission entre l'arbre d'entrée 3 et l'arbre de sortie 5 de la boîte de vitesses. L'arbre de sortie 5 coopère avec un pignon 10 d'entrée du différentiel afin de transmettre le couple aux roues 9a, 9b. Un levier de vitesses 20 forme un organe de changement de rapports de la boîte de vitesses 2 et permet de sélectionner et d'engager manuellement les synchroniseurs 8. Le levier de vitesses 20 est associé à un capteur de position 21 permettant de détecter le rapport sélectionné ainsi qu'un changement de rapport.

Par ailleurs, le véhicule est équipé de nombreux capteurs, tels qu'un capteur 11 de mesure du régime moteur, un capteur 12 de mesure de la vitesse de rotation de l'arbre d'entrée 3 de la boite de vitesses 2 et/ou un capteur 13 de mesure de la vitesse de rotation de l'arbre de sortie 5 de la boîte de vitesses 2.

Le véhicule automobile comporte en outre un volant 22, une pédale 23 de frein associée à un capteur 24 apte à délivrer un signal représentatif de la position de la pédale de frein, un module de pilotage du freinage du type ABS 28, une pédale 25 d'accélérateur associée à un capteur de position 26 de la pédale d'accélérateur, un frein de stationnement 27, un module de gestion du frein de stationnement 29 et un module d'assistance au parcage automatique 30.

Dans le mode de réalisation représenté, le véhicule est en outre équipé d'un moyen de sélection 31 permettant notamment au conducteur de choisir s'il souhaite bénéficier d'un, de plusieurs ou de la totalité des modes de pilotage proposés. Le moyen de sélection 31 peut être un commutateur disposé sur le tableau de bord et/ou un panneau de configuration comportant un menu accessible via une interface électronique du contrôle de bord et autorisant une sélection des options à la demande du conducteur. Dans un mode de réalisation, les options des modes de pilotage sont également configurables par l'intermédiaire d'une application apte à communiquer avec une application dédiée d'un dispositif télématique/téléphonique distant, du type « Smartphone ».

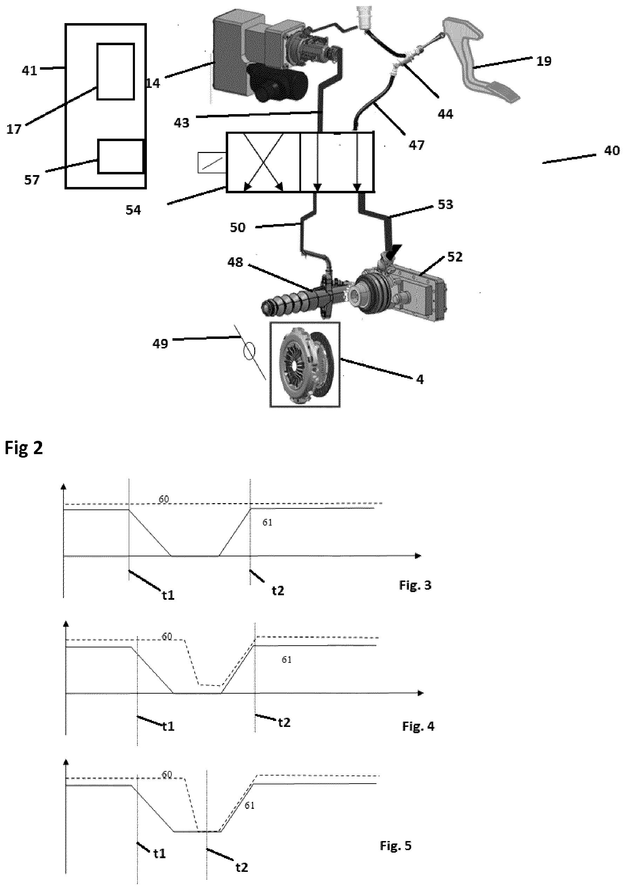

On va maintenant décrire en référence aux figures 1 et 2 un exemple de commande d'embrayage 40 selon l'invention.

La commande d'embrayage 40 permet :
- d'une part une commande de l'embrayage 4 via un actionneur électrique 14, à la manière d'un embrayage de type « clutch by wire », et
- d'autre part une commande de l'embrayage 4 par appui sur une pédale d'embrayage 19.

La commande de l'embrayage 4 se fait par exemple via une fourchette 49 qui est ainsi déplacée soit via l'actionneur électrique 14, soit via appui sur la pédale d'embrayage 19.

La commande d'embrayage 40 comprend ici une unité de contrôle 41 de l'embrayage 4 qui intègre une unité de pilotage 17 de l'actionneur 14. Cette unité de pilotage 17 est ici reliée à l'actionneur 14 via un bus de multiplexage 18. La commande 40 comprend un capteur de position 20, visible sur la figure 1, associé à la pédale d'embrayage 19, et apte à délivrer un signal représentatif de la position de cette pédale 19. Cette information est utilisée par l'unité de pilotage 17 pour commander l'actionneur électrique 14. L'actionneur électrique 14 est dans l'exemple décrit également relié à une batterie 15 du véhicule via un réseau d'alimentation électrique 16. L'actionneur 15 comprend par exemple une pompe électrique apte à déplacer du fluide sous pression. Lorsque l'actionneur est commandé de manière à amener l'embrayage 4 en position débrayée, le fluide sous pression est dans l'exemple décrit envoyé en sortie de l'actionneur 14 dans une deuxième conduite hydraulique 43.

Le capteur de position 20 est par exemple un capteur à contact comportant une tige mobile en contact avec la pédale d'embrayage 19. Toutefois, le capteur de position 20 peut être est un capteur de proximité, sans contact. Le capteur de position 20 peut être fixé sur le châssis du véhicule et permet ainsi de délivrer un signal représentatif de la position absolue de la pédale 19, c'est à dire de la position de la pédale par rapport au châssis. Toutefois, le capteur de position 20 peut encore être agencé de manière à délivrer un signal représentatif de la position relative de la pédale 19, c'est à dire de la position de la pédale 19 par rapport à un organe d'appui monté pivotant sur le châssis.

Selon l'invention, un lien physique existe entre la pédale d'embrayage 19 et l'embrayage 4. La pédale d'embrayage 19 est ainsi reliée à un cylindre émetteur 44 de commande hydraulique de sorte qu'un appui sur la pédale d'embrayage 19 génère l'envoi d'un fluide sous pression en sortie du cylindre émetteur 44 dans une première conduite hydraulique 47.

La commande 40 selon l'invention met également en oeuvre un cylindre récepteur 48 recevant du fluide sous pression via une troisième conduite hydraulique 50 lorsque l'on cherche à mettre l'embrayage 4 en position débrayée. Ce fluide sous pression peut, comme on le verra par la suite :
- soit être généré par le cylindre émetteur 44 et cheminer préalablement dans la première conduite hydraulique 47,
- soit être généré par l'actionneur électrique 14 et cheminer préalablement dans la deuxième conduite hydraulique 43.

La commande 40 selon l'invention comprend encore un simulateur d'effort 52 recevant du fluide sous pression via une quatrième conduite hydraulique 53 et exerçant un effort de réaction apte à s'opposer à l'appui sur la pédale d'embrayage 19 ou au déplacement de l'actionneur 14. Dans l'exemple considéré, le simulateur d'effort 52 a préalablement appris la caractéristique position/couple de l'embrayage, de sorte que l'effort de réaction qu'il exerce, s'opposant au fluide sous pression arrivant via la quatrième conduite hydraulique 53, est cohérent avec la position dans laquelle est l'embrayage 4. Dans une variante, le simulateur d'effort comprend une came dont le profil est choisi pour modifier la flèche d'un ressort de la commande d'embrayage.

La commande 40 selon l'invention comprend également un système d'aiguillage 54 ayant comme entrées la première conduite hydraulique 47 et la deuxième conduite hydraulique 43, et ayant comme sorties la troisième commande hydraulique 50 et la quatrième conduite hydraulique 53, ce système d'aiguillage 54 permettant de modifier les connexions entre ces entrées et ces sorties.

Dans l'exemple considéré, le système d'aiguillage 54 comprend une électrovanne 55 et un circuit de commande 57 de cette électrovanne 55. Le circuit de commande 57 est ici intégré à l'unité de contrôle 41 de l'embrayage 4.

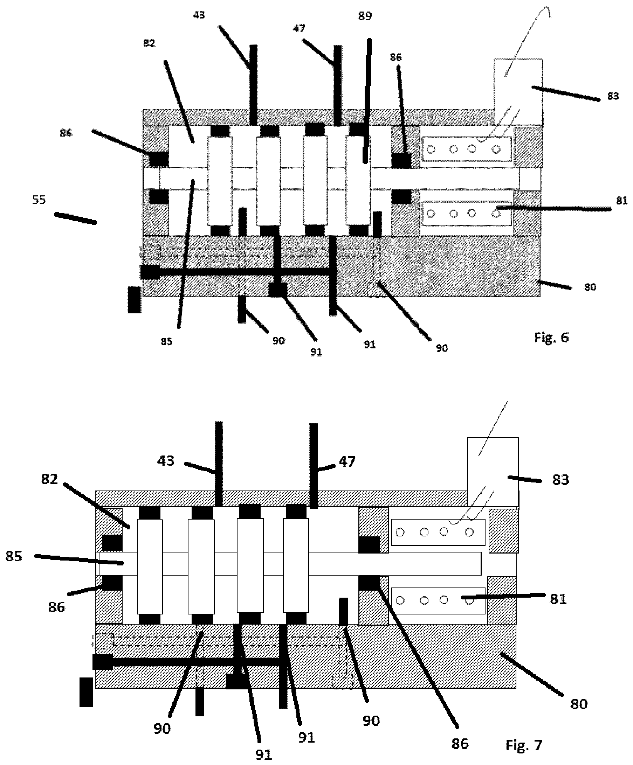

Les figures 6 et 7 représentent un exemple de réalisation de l'électrovanne 55. L'électrovanne 55 comprend un boîtier 80 regroupant un actionneur électrique 81 et une chambre 82 dans laquelle débouchent les première conduite 47, deuxième conduite 43, troisième conduite 50 et quatrième conduite 53.

L'électrovanne 55 comprend un connecteur 83 permettant l'alimentation électrique de l'actionneur 81 pour modifier les connexions entre les première conduite 47 et deuxième conduite 43 d'une part, et les troisième conduite 50 et quatrième conduite 53 d'autre part. L'actionneur électrique 81 est ici un électroaimant.

Cet électroaimant 81 déplace ici une tige 85 portée par deux roulements 86 disposés aux extrémités de la chambre 82. La tige 85 porte ici quatre volets 89 identiques se succédant dans la chambre 82 le long de la tige. On constate sur les figures 6 et 7 que la première conduite 47 et la deuxième conduite 43 débouchent dans la chambre 82 par un seul orifice tandis que la troisième conduite 50 débouche dans cette chambre via deux orifices 90 à distance l'un de l'autre dans la chambre 82 et que la quatrième conduite 53 débouche également dans la chambre 82 via deux orifices 91 à distance l'un de l'autre.

Le système d'aiguillage 54 peut commuter entre :
- une première configuration dans laquelle la première conduite 47 est en communication fluidique avec la quatrième conduite 53, et la deuxième conduite 43 est en communication fluidique avec la troisième conduite 50, de manière à ce que le déplacement de l'actionneur 14 pour suivre une consigne mette l'embrayage en position débrayée tandis que le simulateur d'effort 52 exerce un effort de réaction s'opposant à l'appui sur la pédale d'embrayage 19, une telle première configuration étant représentée sur la figure 6 et
- une deuxième configuration dans laquelle la première conduite 47 est en communication fluidique avec la troisième conduite 50, de manière à ce que l'appui sur la pédale d'embrayage 19 mette l'embrayage 4 en position débrayée, une telle deuxième configuration étant représentée sur la figure 7.

Dans la première configuration, l'embrayage 4 est ainsi commandé par l'actionneur électrique 14, similairement à une commande de type « clutch by wire » et le simulateur d'effort 52 permet d'exercer sur la pédale d'embrayage 19 un effort de réaction cohérent avec la position de l'embrayage 4.

Dans la deuxième configuration, c'est l'appui sur la pédale d'embrayage 19 qui permet de mettre l'embrayage en position débrayée et c'est le relâchement de cette pédale d'embrayage 19 qui permet le retour en position embrayée. On constate sur la figure 2 que, dans cette deuxième configuration, la deuxième conduite hydraulique 43 est en communication fluidique avec la quatrième conduite hydraulique 53.

La commande d'embrayage 40 est particulièrement utile dans le cas où le mode « roue libre » est mis en oeuvre afin d'économiser du carburant. Ce mode « roue libre » est par exemple enclenché lorsque le capteur de position 26 associé à la pédale 25 d'accélérateur traduit le non-appui sur cette pédale 25 alors que le véhicule roule.

Une consigne est alors transmise au circuit de commande 57 de l'électrovanne 55 et ce dernier impose alors à l'électrovanne 55 d'occuper la première configuration à un temps t1. Afin de mettre en oeuvre le mode « roue libre », l'actionneur électrique 14 est alors commandé par l'unité de contrôle 41 de l'embrayage pour amener l'embrayage en position débrayée. L'arrêt du moteur thermique du véhicule ne freine donc pas le véhicule.

Un premier cas, représenté par le chronogramme de la figure 3 peut alors se produire. Aucun appui de l'utilisateur ne se produit pendant la mise en oeuvre du mode « roue libre » de sorte que le niveau d'effort 60 associé à la pédale d'embrayage 19 reste constant, comme on peut le voir sur la figure 3. Dans ce cas, le système d'aiguillage 54 reste dans la première configuration et le retour en position embrayée de l'embrayage 4 se fait par commande de l'actionneur électrique 14, par exemple après que le moteur thermique du véhicule a été remis en marche ou par exemple à la suite de l'une ou l'autre des actions suivantes : appui de l'utilisateur sur la pédale 23 de frein, appui de l'utilisateur sur la pédale 25 d'accélérateur, action de l'utilisateur sur le levier de vitesses 20, détection d'une inadéquation entre la vitesse du véhicule et le rapport de boîte de vitesses engagé, ou encore appui de l'utilisateur sur la pédale 19 d'embrayage. A un instant t2, postérieur au retour dans la position embrayée, le système d'aiguillage 54 commute dans la deuxième configuration.

Les figures 4 et 5 se référent à des cas différents dans lesquels l'utilisateur appuie sur la pédale d'embrayage 19 pour changer de rapport de vitesse ou arrêter le véhicule alors que l'embrayage 4 est en position débrayée et que le système d'aiguillage 54 est dans la première configuration, postérieurement à l'instant t1. Dans chacun des cas des figures 4 et 5, le fait que la première conduite hydraulique 47 soit connectée fluidiquement à la quatrième conduite 53 permet que l'effort de réaction sur la pédale 19 ressenti par l'utilisateur soit cohérent avec ce qu'il attend, grâce au simulateur d'effort 52.

Dans le cas de la figure 4, l'appui exercé par l'utilisateur sur la pédale d'embrayage 19 génère sur cette pédale 19 un effort insuffisant pour atteindre la valeur d'effort permettant le débrayage. On constate ainsi sur la figure 4 que le niveau d'effort 60 associé à cette pédale d'embrayage 19 n'atteint pas le niveau d'effort 61 de l'actionneur électrique 14. Le système d'aiguillage 54 reste alors dans la première configuration, c'est-à-dire que l'embrayage 4 reste commandé par l'actionneur électrique 14. Cependant, dans l'exemple décrit, la commande 40 prend note de la volonté de l'utilisateur de ramener l'embrayage 4 en position embrayée et une consigne est alors transmise à l'actionneur électrique 14, permettant le retour de l'embrayage en position embrayée au fur et à mesure du relâchement par l'utilisateur de la pédale d'embrayage 19. Postérieurement à ce retour en position embrayée, le système d'aiguillage 54 commute dans la deuxième configuration à l'instant t2.

Dans le cas de la figure 5, l'appui exercé par l'utilisateur sur la pédale d'embrayage 19 génère un effort suffisant pour permettre le débrayage. Le circuit de commande 57 de l'électrovanne amène alors l'électrovanne 55 dans la deuxième configuration à l'instant t2 de telle sorte que l'embrayage 4 est alors commandé par la pédale d'embrayage 19. Le retour en position embrayée s'effectue alors par relâchement de la pédale d'embrayage 19 et non plus via l'actionneur électrique 14.

L'invention n'est pas limitée aux exemples qui viennent d'être décrits, mais par les revendications.

## Revendications

1. Commande d'embrayage (40), comprenant :
- une pédale d'embrayage (19),
- un cylindre émetteur (44) envoyant du fluide sous pression dans une première conduite hydraulique (47) lorsqu'un utilisateur appuie sur la pédale d'embrayage (19) pour mettre l'embrayage (4) en position débrayée,
- un actionneur électrique (14) se déplaçant pour envoyer du fluide sous pression dans une deuxième conduite hydraulique (43) lorsqu'une consigne visant à mettre l'embrayage (4) en position débrayée est reçue,
- un cylindre récepteur (48) recevant du fluide sous pression via une troisième conduite hydraulique (50) lorsque l'on cherche à mettre l'embrayage (4) en position débrayée, et
- un simulateur d'effort (52) recevant du fluide sous pression via une quatrième conduite hydraulique (53) et exerçant un effort de réaction apte à s'opposer à l'appui sur la pédale d'embrayage(19) ou au déplacement de l'actionneur (14), **caractérisé en ce que** la commande (40) comprend un système d'aiguillage (54) permettant de commuter entre au moins les deux configurations suivantes :
- une première configuration dans laquelle la première conduite (47) est en communication fluidique avec la quatrième conduite (53) et la deuxième conduite (43) est en communication fluidique avec la troisième conduite (50), de manière à ce que le déplacement de l'actionneur (14) pour suivre une consigne mette l'embrayage (4) en position débrayée tandis que le simulateur d'effort (52) exerce un effort de réaction s'opposant à l'appui sur la pédale d'embrayage (19), et
- une deuxième configuration dans laquelle la première conduite (47) est en communication fluidique avec la troisième conduite (50), de manière à ce que l'appui sur la pédale d'embrayage (19) mette l'embrayage (4) en position débrayée.

2. Commande d'embrayage selon la revendication 1, la deuxième conduite (43) étant également en communication fluidique avec la quatrième conduite (53) dans la deuxième configuration du système d'aiguillage (54), de manière à ce que le simulateur d'effort (52) exerce un effort de réaction s'opposant au déplacement de l'actionneur (14).

3. Commande d'embrayage selon la revendication 1, la deuxième conduite (43) étant fermée dans la deuxième configuration du système d'aiguillage (54).

4. Commande d'embrayage selon l'une quelconque des revendications 1 à 3, le système d'aiguillage (54) comprenant une électrovanne (55) et un circuit de commande (57) de cette électrovanne (55).

5. Procédé de commande d'un embrayage (4) à l'aide de la commande (40) selon l'une quelconque des revendications précédentes.

6. Procédé selon la revendication 5, comprenant :
- l'étape selon laquelle on impose la première configuration du système d'aiguillage (54) lorsqu'une consigne traduisant le non-appui sur la pédale d'accélérateur (25) est reçue, et
- l'étape ultérieure selon laquelle l'actionneur (14) est commandé pour mettre l'embrayage (4) en position débrayée.

7. Procédé selon la revendication 6, dans lequel, alors que l'embrayage (4) est en position débrayée, l'utilisateur appuie sur la pédale d'embrayage (19) dans le but de mettre l'embrayage en position débrayée, notamment pour changer de rapport de boîte de vitesses, sans que l'effort exercé sur cette pédale d'embrayage (19) ne soit suffisant pour atteindre la valeur d'effort permettant ce débrayage, et dans lequel le système d'aiguillage (54) reste dans la première configuration.

8. Procédé selon la revendication 7, dans lequel l'actionneur (14) est commandé pour ré-embrayer l'embrayage (4) en suivant le relâchement par l'utilisateur de la pédale d'embrayage (19).

9. Procédé selon la revendication 6, dans lequel, alors que l'embrayage (4) est en positon débrayée, l'utilisateur appuie sur la pédale d'embrayage (19) dans le but de mettre l'embrayage en position débrayée, notamment pour changer de rapport de boîte de vitesses, en exerçant sur cette pédale d'embrayage (19) un effort suffisant pour atteindre la valeur d'effort permettant ce débrayage, et dans lequel le système d'aiguillage (54) passe dans la deuxième configuration afin que le ré-embrayage puisse être effectué par relâchement de la pédale d'embrayage (19).

## Patentansprüche

1. Kupplungssteuervorrichtung (40), welche umfasst:
- ein Kupplungspedal (19),
- einen Geberzylinder (44), welcher Druckfluid in eine erste Hydraulikleitung (47) presst, wenn ein Benutzer auf das Kupplungspedal (19) drückt, um die Kupplung (4) in die ausgerückte Position zu bringen,
- einen elektrischen Aktuator (14), der sich verlagert, um Druckfluid in eine zweite Hydraulikleitung (43) zu pressen, wenn eine Anweisung mit dem Ziel, die Kupplung (4) in die ausgerückte Position zu bringen, empfangen wird,
- einen Nehmerzylinder (48), der Druckfluid über eine dritte Hydraulikleitung (50) aufnimmt, wenn versucht wird, die Kupplung (4) in die ausgerückte Position zu bringen, und
- einen Kraftsimulator (52), der Druckfluid über eine vierte Hydraulikleitung (53) aufnimmt und eine Reaktionskraft ausübt, die geeignet ist, dem Druck auf das Kupplungspedal (19) oder der Verlagerung des Aktuators (14) entgegenzuwirken, **dadurch gekennzeichnet, dass** die Steuervorrichtung (40) ein Weichensystem (54) umfasst, welches ermöglicht, zwischen wenigstens den zwei folgenden Konfigurationen umzuschalten:
- einer ersten Konfiguration, in welcher die erste Leitung (47) mit der vierten Leitung (53) in Fluidverbindung steht und die zweite Leitung (43) mit der dritten Leitung (50) in Fluidverbindung steht, so dass die Verlagerung des Aktuators (14), um einer Anweisung zu folgen, die Kupplung (4) in die ausgerückte Position bringt, während der Kraftsimulator (52) eine Reaktionskraft ausübt, die dem Druck auf das Kupplungspedal (19) entgegenwirkt, und
- einer zweiten Konfiguration, in welcher die erste Leitung (47) mit der dritten Leitung (50) in Fluidverbindung steht, so dass der Druck auf das Kupplungspedal (19) die Kupplung (4) in die ausgerückte Position bringt.

2. Kupplungssteuervorrichtung nach Anspruch 1, wobei in der zweiten Konfiguration des Weichensystems (54) auch die zweite Leitung (43) mit der vierten Leitung (53) in Fluidverbindung steht, so dass der Kraftsimulator (52) eine Reaktionskraft ausübt, die der Verlagerung des Aktuators (14) entgegenwirkt.

3. Kupplungssteuervorrichtung nach Anspruch 1, wobei die zweite Leitung (43) in der zweiten Konfiguration des Weichensystems (54) geschlossen ist.

4. Kupplungssteuervorrichtung nach einem der Ansprüche 1 bis 3, wobei das Weichensystem (54) ein Magnetventil (55) und eine Steuerschaltung (57) dieses Magnetventils (55) umfasst.

5. Verfahren zur Steuerung einer Kupplung (4) mithilfe der Steuervorrichtung (40) nach einem der vorhergehenden Ansprüche.

6. Verfahren nach Anspruch 5, welches umfasst:
- den Schritt, gemäß dem dem Weichensystem (54) die erste Konfiguration verliehen wird, wenn eine Anweisung empfangen wird, die das Nicht-Drücken auf das Gaspedal (25) zum Ausdruck bringt,
- den nachfolgenden Schritt, gemäß dem der Aktuator (14) angesteuert wird, um die Kupplung (4) in die ausgerückte Position zu bringen.

7. Verfahren nach Anspruch 6, wobei, wenn sich die Kupplung (4) in der ausgerückten Position befindet, der Benutzer auf das Kupplungspedal (19) mit dem Ziel drückt, die Kupplung in die ausgerückte Position zu bringen, insbesondere um das Untersetzungsverhältnis des Getriebes zu ändern, ohne dass die auf dieses Kupplungspedal (19) ausgeübte Kraft ausreichend ist, um den Wert der Kraft zu erreichen, der dieses Ausrücken ermöglicht, und wobei das Weichensystem (54) in der ersten Konfiguration verbleibt.

8. Verfahren nach Anspruch 7, wobei im Anschluss an das Loslassen des Kupplungspedals (19) durch den Benutzer der Aktuator (14) angesteuert wird, um die Kupplung (4) wieder einzurücken.

9. Verfahren nach Anspruch 6, wobei, wenn sich die Kupplung (4) in der ausgerückten Position befindet, der Benutzer auf das Kupplungspedal (19) mit dem Ziel drückt, die Kupplung in die ausgerückte Position zu bringen, insbesondere um das Untersetzungsverhältnis des Getriebes zu ändern, und dabei auf dieses Kupplungspedal (19) eine Kraft ausübt, die ausreichend ist, um den Wert der Kraft zu erreichen, der dieses Ausrücken ermöglicht, und wobei das Weichensystem (54) in die zweite Konfiguration wechselt, damit das erneute Einrücken durch Loslassen des Kupplungspedals (19) durchgeführt werden kann.

## Claims

1. Clutch control (40), comprising:
- a clutch pedal (19),
- a transmitting cylinder (44) sending fluid under pressure in a first hydraulic pipe (47) when a user presses on the clutch pedal (19) to set the clutch (4) to declutched position,
- an electric actuator (14) being displaced to send fluid under pressure in a second hydraulic pipe (43) when an order aiming to set the clutch (4) to declutched position is received,
- a receiving cylinder (48) receiving fluid under pressure via a third hydraulic pipe (50) when seeking to set the clutch (4) to declutched position, and
- a force simulator (52) receiving fluid under pressure via a fourth hydraulic pipe (53) and exerting a reaction force capable of opposing the pressing on the clutch pedal (19) or the displacement of the actuator (14),
**characterized in that** the control (40) comprises a switching system (54) that makes it possible to switch between at least the following two configurations:
- a first configuration in which the first pipe (47) is in fluidic communication with the fourth pipe (53) and the second pipe (43) is in fluidic communication with the third pipe (50), so that the displacement of the actuator (14) to follow an order places the clutch (4) in declutched position while the force simulator (52) exerts a reaction force opposing the pressing on the clutch pedal (19), and
- a second configuration in which the first pipe (47) is in fluidic communication with the third pipe (50), so that the pressing on the clutch pedal (19) sets the clutch (4) declutched position.

2. Clutch control according to Claim 1, the second pipe (43) being also in fluidic communication with the fourth pipe (53) in the second configuration of the switching system (54), so that the force simulator (52) exerts a reaction force opposing the displacement of the actuator (14).

3. Clutch control according to Claim 1, the second pipe (43) being closed in the second configuration of the switching system (54).

4. Clutch control according to any one of Claims 1 to 3, the switching system (54) comprising a solenoid valve (55) and a control circuit (57) for this solenoid valve (55).

5. Method for controlling a clutch (4) using the control (40) according to any one of the preceding claims.

6. Method according to Claim 5, comprising:
- the step whereby the first configuration of the switching system (54) is imposed when an order translating the non-pressing on the accelerator pedal (25) is received, and
- the subsequent step whereby the actuator (14) is controlled to set the clutch (4) to declutched position.

7. Method according to Claim 6, in which, while the clutch (4) is in declutched position, the user presses on the clutch pedal (19) in order to set the clutch to declutched position, notably to change the gearbox ratio, without the force exerted on this clutch pedal (19) being sufficient to reach the force value that allows this declutching, and in which the switching system (54) remains in the first configuration.

8. Method according to Claim 7, in which the actuator (14) is controlled to re-clutch the clutch (4) by following the releasing by the user of the clutch pedal (19).

9. Method according to Claim 6, in which, while the clutch (4) is in declutched position, the user presses on the clutch pedal (19) in order to set the clutch to declutched position, notably to change the gearbox ratio, by exerting on this clutch pedal (19) a force that is sufficient to reach the force value allowing this declutching, and in which the switching system (54) switches to the second configuration in order for the re-clutching to be able to be performed by releasing of the clutch pedal (19).
